# EUROPEAN PATENT SPECIFICATION

(11) **EP 2 255 979 B1**
(45) Date of publication and mention of the grant of the patent: **25.12.2013**
(21) Application number: 10003532.8
(22) Date of filing: 31.03.2010
(51) Int. Cl.: B60C 13/00

(54) **Pneumatic tire**
Luftreifen
Pneu

(30) Priority: 27.05.2009 JP 2009128082
(43) Date of publication of application: 01.12.2010
(73) Proprietor: Sumitomo Rubber Industries, Ltd., Hyogo-ken (JP)
(72) Inventor: Mukai, Tomoyuki, Kobe-shi Hyogo 651-0072 (JP)
(74) Representative: Manitz, Finsterwald & Partner GbR

(56) References cited:
- EP-A1- 0 522 781
- EP-A2- 0 751 014
- JP-A- 2007 062 484
- JP-U- 59 099 730

## Description

### Background of the invention

The present invention relates to a pneumatic tire, more particularly to a structure provided on the outer surface of a sidewall portion which can facilitate elimination of air existing between a tire vulcanizing mold and the green tire to prevent the occurrence of bareness of rubber, namely, void on the outer surface of the vulcanized tire. The features of the preamble of claim 1 are known from EP 0 751 014 A2. JP 2007 062484 and EP 0 522 781 A1 disclose pneumatic tires with patterns on the an outer surface of the tire.

In general, a pneumatic tire is manufactured by vulcanizing the green tire put in a split mold. It is ideal that the outer surface of the green tire comes into close contact with the inner surface of the mold without air being entrapped therebetween when closing the split mold. This is however, almost impossible. In actuality, the close contact is achieved by inflating a bladder put in the hollow of the green tire in the mold.

Roughly speaking, during inflating the bladder, the tire outer surface comes into contact with the inner surface of the mold from the radially outside towards the radially inside of the tire, and resulting from a cause of a relatively higher rigidity of the bead portion, the contact of a specific region radially inside the maximum section width position of the green tire become latest. Therefore, the air tends to be entrapped in this region. If the entrapped air is remained after the vulcanization, this results in bareness of rubber in the outer surface of the sidewall portion, and the yielding percentage is lowered.

In order to prevent the occurrence of bareness of rubber, there has been widely employed circumferentially extending vent grooves disposed in the inner surface of the vulcanizing mold. Incidentally, such a vent groove forms a so called vent line protruding from the outer surface of the vulcanized tire. Thus, a small rib formed on the tire outer surface can be considered as a vestige of a vent groove formed on the vulcanizing mold therefor.

On the other hand, in manufacturing of the pneumatic tires, it is often required to manufacture plural kinds of tires having substantially same exterior appearance (specifically, tread pattern, tire profile/contour, tire size) but having different specifications adapted to service area or country (specifically, climate, temperature, road surface and the like), by the use of the same vulcanizing mold.

In such case, there is a possibility that different rubber compounds are used in a same part of the tire and/or different sizes are given to a same tire component. Accordingly, the rigidity of the green tire is varied locally, and there is a possibility that positions where the air between the green tire and mold is liable to remain are also changed.

This results in that a certain kind of tires suffer from bareness of rubber though the bareness of rubber is not occurred in another kind of tires.

### Summary of the invention

A primary object of the present invention is therefore, to provide a pneumatic tire in which bareness of rubber on the tire outer surface is effectively prevented.

Another object of the present invention is to prevent the occurrence of bareness of rubber in the lower part of the sidewall portion even if the rigidity of this part is varied regardless of designed or undesigned.

The pneumatic tire according to the present invention is defined in claim 1.

Here, the maximum width position (m) is a radial position at which the maximum cross sectional width of the carcass (6) lies under a normally inflated unloaded condition of the tire.

The normally inflated unloaded condition is such that the tire is mounted on a standard wheel rim and inflate to a standard pressure but loaded with no tire load.

The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load capacity" in ETRTO, the maximum value given in the above-mentioned table in TRA or the like. In case of passenger car tires, however, the standard pressure is uniformly defined by 180 kPa.

In this application, various dimensions, positions and the like of the tire refer to those under a normally inflated unloaded condition of the tire unless otherwise noted.

As described above, the vent lines and small ribs correspond to vent grooves formed in the inner surface of a vulcanizing mold. Therefore, when manufacturing the pneumatic tire, the air existing between the first and second vent lines (or vent grooves) is led to the first and second vent lines through the ribs (or vent grooves) in the serrated area and discharged. Thus, the occurrence of bareness of rubber can be prevented in a wide area between the first and second vent lines, therefore, even if the positions where the air is liable to remain are changed within this range, the bareness of rubber can be surely prevented. As a result, plural kinds of tires having different specifications can be manufactured with high yielding percentages.

### Brief Description of the Drawings

Fig.1 is a cross sectional view of a pneumatic tire according to the present invention.
Fig.2 is a side view of the pneumatic tire.
Fig.3 is a partial side view of the pneumatic tire showing the first and second vent lines and ribs.
Fig.4(A) is a perspective view showing a part X of Fig.3.
Fig.4(B) is a cross sectional view taken along line A-A in Fig.4(A).
Fig.4(C) is a cross sectional view taken along line B-B in Fig.4(A).
Fig.5(A) shows a part corresponding to the first and second vent lines and ribs shown in Fig.4(C) during vulcanization wherein the arrows indicate air flows.
Fig.5(B) is a cross sectional view taken along line z-z in Fig.5(A).
Fig.6 is an enlarged partial cross sectional view of a tire vulcanizing mold according to the present invention showing vent grooves corresponding to the vent lines formed on the tire outer surface and vent holes opened at the vent grooves.
Fig.7 and Fig.8 are front views each showing another example of the serrated area.
Fig.9(A) is a cross sectional view showing the serrated area of a test tire Ref.2 used in the undermentioned comparative tests.
Fig.9(B) is a cross sectional view showing the serrated area of a test tire Ref.1 used in the undermentioned comparative tests.

### Description of the Preferred Embodiments

Embodiments of the present invention will now be described in detail in conjunction with the accompanying drawings.

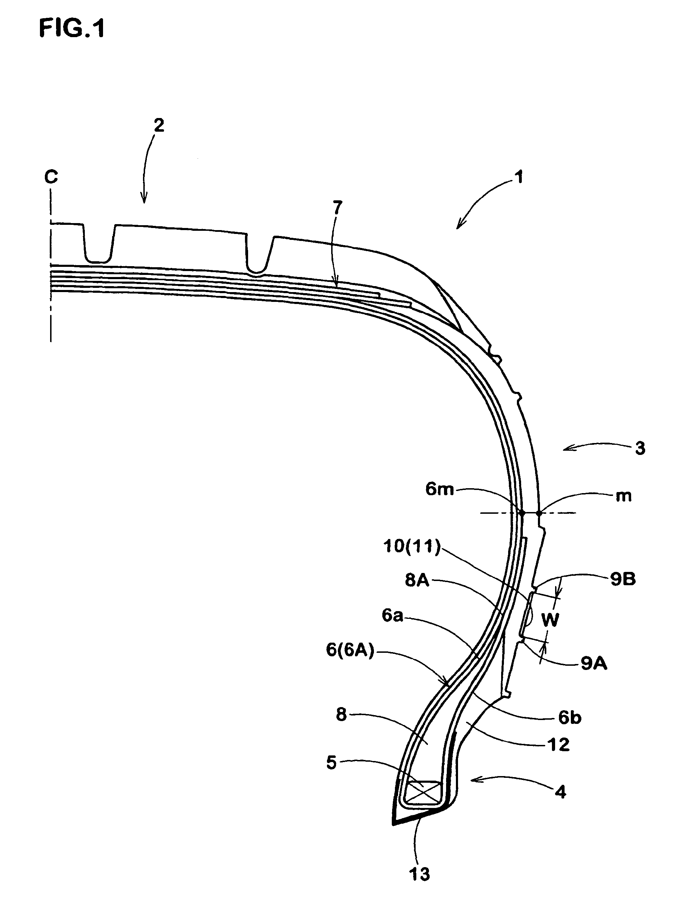

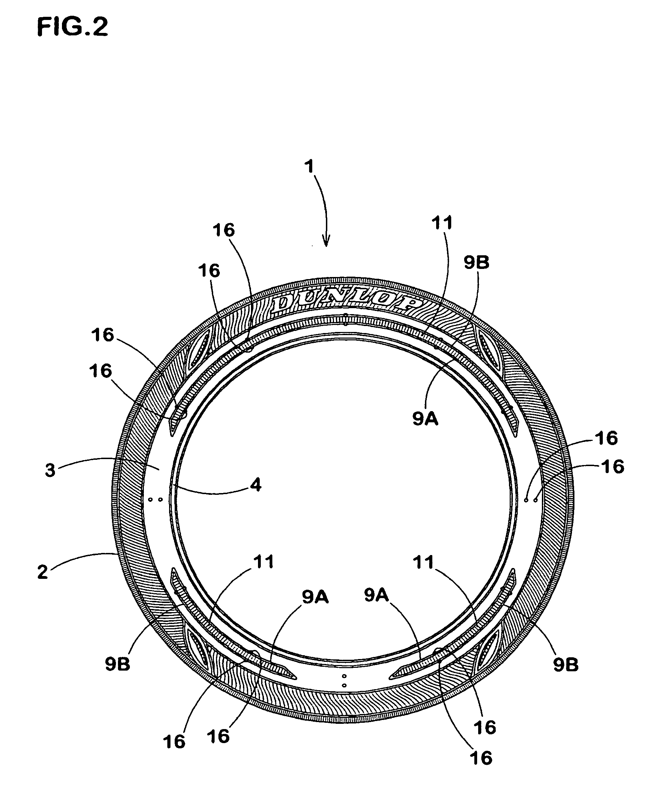

Pneumatic tire 1 according to the present invention has a tread portion 2 with tread edges, a pair of sidewall portions 3 extending radially inwardly from the tread edges, and a pair of bead portions 4 located at the radially inner ends of the sidewall portions 3 as shown in Figs.1 and 2.

In this embodiment, the pneumatic tire 1 is a radial tire for passenger cars. The aspect ratio of the tire is not less than 50 %. In general, the concerned bareness of rubber in the lower sidewall portion is liable to occur on such a low aspect ratio tire.

The pneumatic tire 1 comprises
a bead core 5 dispersed in each of the bead portions 4,
a carcass 6 extending between the bead portions 4 through the tread portion 2 and sidewall portions 3,
a tread reinforcing belt 7 disposed radial outside the carcass 6 in the tread portion,
a sidewall rubber 12 disposed axially outside the carcass 6 in each of the sidewall portions 3, and
a chafer rubber 13 disposed in each of the bead portions 4 so as to form a surface of the bead portion contacting with the wheel rim (not shown).

The carcass 6 is composed of at least one carcass ply 6A of cords extending between the bead portions 4 through the tread portion 2 and sidewall portions 3 and turned up around the bead core 5 in each of the bead portions 4 from the inside to the outside of the tire so as to form a pair of turned up portions 6b and a main portion 6a therebetween.
The carcass 6 in this embodiment is composed of only one carcass ply 6A.

The bead portions 4 are each provided between the turned up portion 6b and main portion 6a with a bead apex 8 made of a hard rubber extending radially outwardly from the bead core 5 in a tapered manner in order to increase the bending rigidity of the bead portion 4.

The belt 7 comprises a breaker and optionally a band. The breaker is composed of at least two cross breaker plies of parallel steel cords laid at angles of from 10 to 35 degrees with respect to the tire equator c. The band is composed of at least one band ply of at least one cord wound spirally around the breaker.
The belt 7 in this embodiment is composed of only two cross breaker plies.

The region of the outer surface of the tire which is radially inside the maximum width position (m), is provided with a pair of first and second vent lines 9A and 9B.
The first and second vent lines 9A and 9B extend in a tire circumferential direction.

The second vent line 9B is disposed radially outside the first vent line 9A, with a certain distance therebetween.

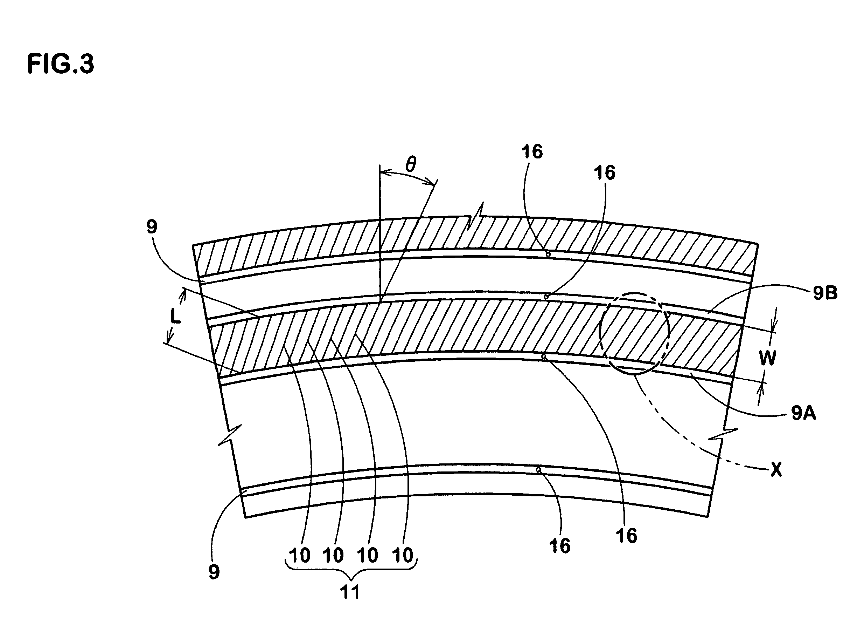

As shown in Fig.3, the area between the first and second vent lines 9A and 9B is formed as a serrated area 11.

The serrated area 11 comprises a large number of circumferentially spaced small ribs 10 extending from the first vent line 9A to the second vent line 9B.

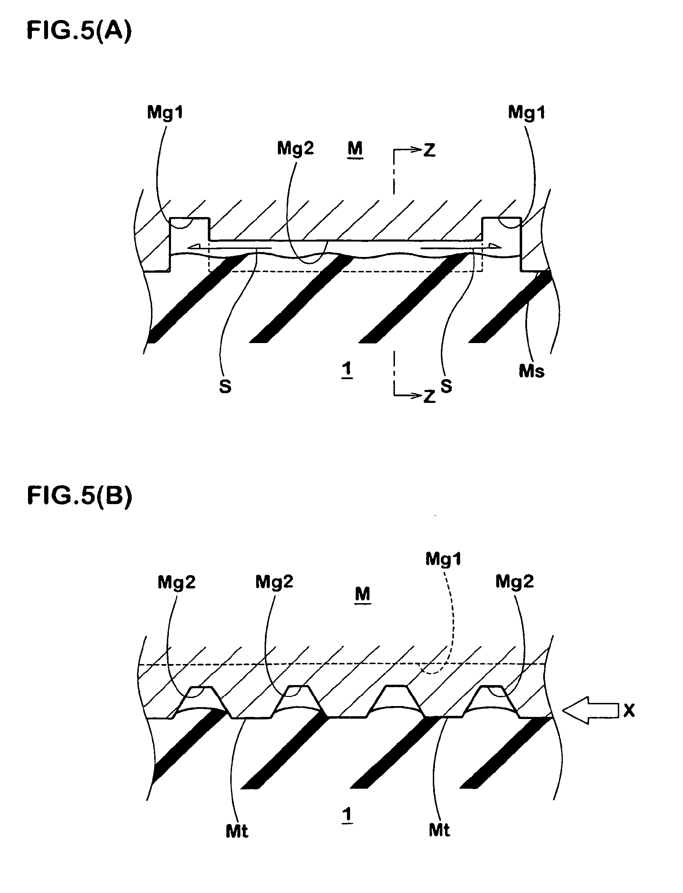

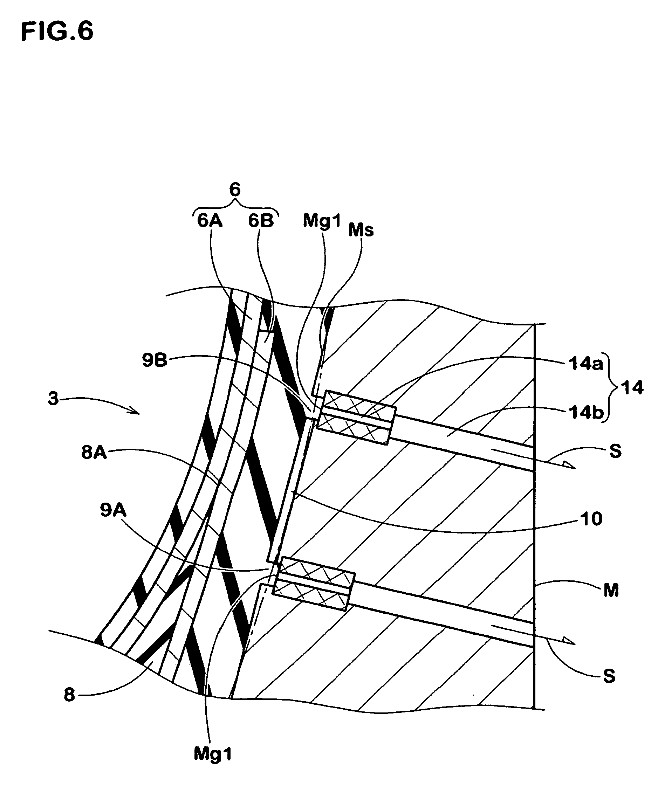

The pneumatic tire 1 is manufactured by vulcanizing a green tire in a vulcanization mold M.
The first and second vent lines 9A and 9B and ribs 10 are formed by vent grooves Mg1 and Mg2 provided in the inner surface Ms of the vulcanization mold M as shown in Fig.5(A) and Fig.5(B).
The vent grooves Mg1 correspond to the first and second vent lines 9A and 9B. The vent grooves Mg2 correspond to the ribs 10. Before vulcanizing the tire, the air existing between the tire and mold can be led to the vent grooves Mg1 through the vent grooves Mg2 as indicated by an arrow S in Fig.5(A).
In order to discharge the air, as shown in Fig.6, vent holes 14, which are continued to the outside of the mold M and connected to a suction pump, are opened at the vent grooves Mg1 for forming the vent lines 9A and 9B.

The vent hole 14 has a small-diameter part 14a and a large-diameter part 14b. The small-diameter part 14a is positioned close to the inner surface of the mold and opened towards the tire outer surface at a diameter of from 0.5 to 3.0 mm. The large-diameter part 14b is continued from the small-diameter part 14a and extends towards the outside of the mold. The small-diameter part 14a is formed by a through hole provided on a vent plug 15 detachably screwed into a threaded portion of the vent hole 14.

The vent holes 14 are preferably arranged at circumferentially constant pitches, more specifically at angularly regular intervals of from 25 to 35 degrees around the tire rotational axis for example.

In the initial stage of the tire vulcanization, the unvulcanized rubber of the outer surface of the green tire flows to fill the vent grooves Mg2 for forming the ribs 10 and then the vent grooves Mg1 for forming the vent lines 9.
As a result, the vent lines 9A and 9B and ribs 10 are molded, forming the serrated area 11.
At this time, the rubber flows out into the vent holes 14 together with the air, and as a result, spews 16 are formed on the tire outer surface, more specifically, on the vent line 9A or 9B or on the vent lines 9A and 9B.
In this embodiment, therefore, the spews 16 are occurred at angularly intervals of from 25 to 35 degrees around the tire rotational axis.

As described above, the air can be effectively prevented from being trapped in a region between the first and second vent lines 9A and 9B, and the occurrence of bareness of rubber in this region can be fully prevented.

The positions where bareness of rubber is liable to occur, namely, air is liable to remain between the tire and mold, vary depending on the height of the bead apex, the rubber compounds used and the like which affect the rigidity of the bead portion of the green tire.
But, such positions concentrate in the above-mentioned region radially inside the maximum width position (m), therefore, the first and second vent lines 9A and 9B are formed in this radially inside region.

The first and second vent lines 9A and 9B are disposed near the radially outer end 8A of the bead apex 8. The radially outer second vent line 9B is disposed radially outside the outer end 8A, and the radially inner vent line 9A is disposed radially inside the outer end 8A as shown in Fig.1. As a result, the air can be most surely discharged.

If the distance w between the first and second vent lines 9A and 9B becomes too long, the resistance of air to flow out increases, and it becomes difficult to discharge the trapped air. Therefore, it is preferable that the distance w is not more than 30 mm, more preferably not more than 25 mm when measured radially along the tire outer surface.
However, if the distance w is too short, there is a possibility that the air is entrapped outside the serrated area 11. Therefore, it is important that the distance w is at least 8 mm, preferably at least 10 mm.

The serrated area 11 has deepest parts 11u and shallowest parts 11h. Specifically, the shallowest parts 11h in this embodiment are the ridges of the ribs 10. The deepest parts 11u in this embodiment are the bottoms of the resultant serration slots formed between the adjacent ribs 10.

The deepest parts 11u have to be positioned at the same level as or alternatively outside a virtual tire outer surface 3g.

The virtual tire outer surface 3g is defined as smoothly connecting the tire outer surface immediately radially inside the radially inner first vent line 9A and the tire outer surface immediately radially outside the radially outer second vent line 9B. Thus, in the tire cross section including the tire rotational axis, although there is possibility that the virtual tire outer surface 3g is slightly curved or straight, the virtual tire outer surface 3g may be considered as being straight in substance.

On the other hand, the shallowest parts 11h have to be positioned inside the ridges 9h of the vent lines 9A and 9B. In other words, the protruding height of the shallowest parts 11h is lower than the protruding height of the ridges 9h, each from the bottoms of the resultant serration slots.

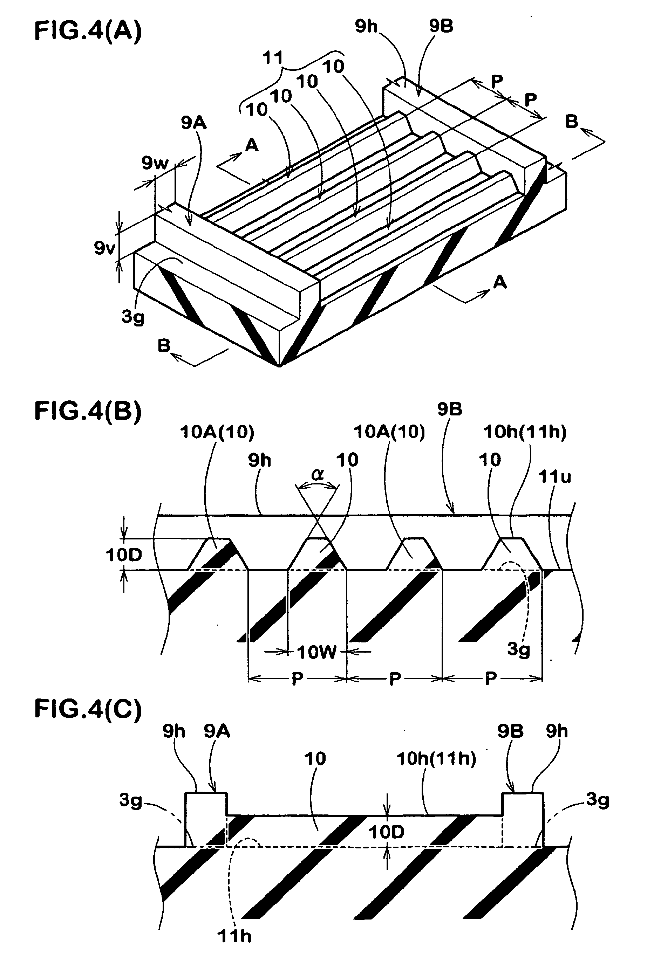

In the example shown in Figs.4(B)-4(C), the deepest parts 11u are positioned at the same level as the virtual tire outer surface 3g.
Further, the ridges 10h of the ribs 10 are each formed by a substantially flat surface having a smaller width than the bottom width 10w of the rib 10. The deepest parts 11u are each formed by a substantially flat surface having a certain width equal to pitch P minus width 10w. The ridges 9h of the vent lines 9A and 9B are each formed by a substantially flat surface having the same width as its bottom width. These flat surfaces (10h, 11u, 9h) are substantially parallel with the virtual tire outer surface 3g.

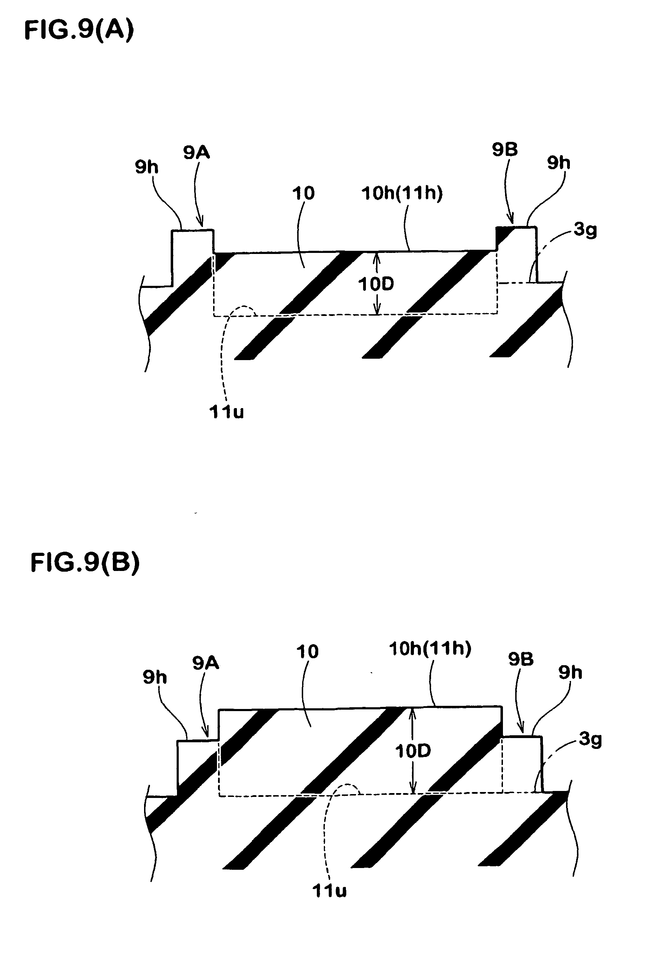

If the deepest parts 11u are positioned inside the virtual tire outer surface 3g as shown in Fig.9(A), the shaping surface Mt of the mold between the vent grooves Mg2 comes into contact with the outer surface of the green tire firstly in this region, and there is possibility that air is liable to entrapped in the shaping surface Mt. Further, the vent lines decrease their rigidity and the vent lines are liable to be torn off.

If the shallowest parts 11h are not positioned inside the ridges 9h of the vent lines 9A and 9B as shown in Fig.9(B), it becomes difficult for the air in the serrated area to flow out from the vent grooves Mg2 into the vent grooves Mg1 to be discharged, and as a result, there is a possibility that bareness of rubber occurs in the serrated area.

If the width 9w and height 9v of the vent lines 9A and 9B (corresponding to the width 9w and depth 9v of the vent grooves Mg1) are too small, it is difficult to effectively discharge the trapped air. It is therefore, preferable that the width 9w is 0.2 to 2.0 mm, and the height 9v is 0.3 to 2.0 mm from the surface 3g.

As to the cross sectional shape of the vent line 9A and 9B, various shapes such as trapezoid, rectangle and triangle can be used, but it is desirable to use such a shape that provides an inclined side surface which facilitate the removal of the mold after the completion of tire vulcanization.

The ribs 10 are arranged at pitches P as shown in Fig.4. The pitches P are preferably set in a range of from 1.5 to 2.5 times the maximum width 10w of the ribs 10.
If the pitches P are smaller than 1.5 times, it becomes difficult to mold finely. If more than 2.5 times, it becomes difficult to effectively discharge the trapped air. In view of the production cost and tire appearance, it is preferable that the pitches P are constant,

In view of the moldability of the rib 10, it is preferable that the rib 10 has a trapezoidal shape in the cross section perpendicular to the longitudinal direction of the rib 10 so that the width is gradually decreased towards the outside of the tire.
It is especially preferable that the angle alpha formed between the two side surfaces of the rib 10 is not more than 90 degrees, more preferably not more than 80 degrees.
If the angle alpha is too narrow, on the other hand, it becomes difficult to completely fill up the groove Mg2 with the rubber, therefore, the angle alpha is preferably not less than 40 degrees, more preferably not less than 60 degrees.
Further, the height 10D of the rib 10 is preferably set in a range of from 0.2 to 0.5 mm, and the maximum width 10w of the rib 10 is preferably set in a range of from 0.2 to 0.8 mm in order to fill up the groove Mg2 with the rubber,

The inclination angle theta of the rib 10 with respect to the tire radial direction is set in a range of from 0 to 45 degrees, preferably not more than 30 degrees.
If the inclination angle theta is more than 45 degrees, as the length L of the ribs 10 or the air flow path to the vent grooves Mg1 increases, and it becomes difficult to smoothly lead the trapped air to the vent grooves Mg1.

In view of the air discharging effect, it is most preferable that the first and second vent lines 9A and 9B extend continuously around the tire rotational axis, describing concentric circles, and as a result, the serrated area 11 is formed continuously around the tire rotational axis. But, it is not always necessary. It is possible that the first and second vent lines 9A and 9B extend discontinuously around the tire rotational axis, like arcs of concentric circles as shown in Figs.3, 7 and 8 as well as eccentric arcs (not shown).
When formed discontinuously, since the first and second vent lines 9A and 9B each have two ends, the two ends of the first vent line 9A are connected to the two ends of the second vent line 9B, respectively, by two radial vent lines 9s, thereby the serrated area is surrounded by the resultant continuous vent line 9. In this case, it is desirable that the total circumferential length of the serrated area or areas 11 is at least 50 % of the whole circumference.

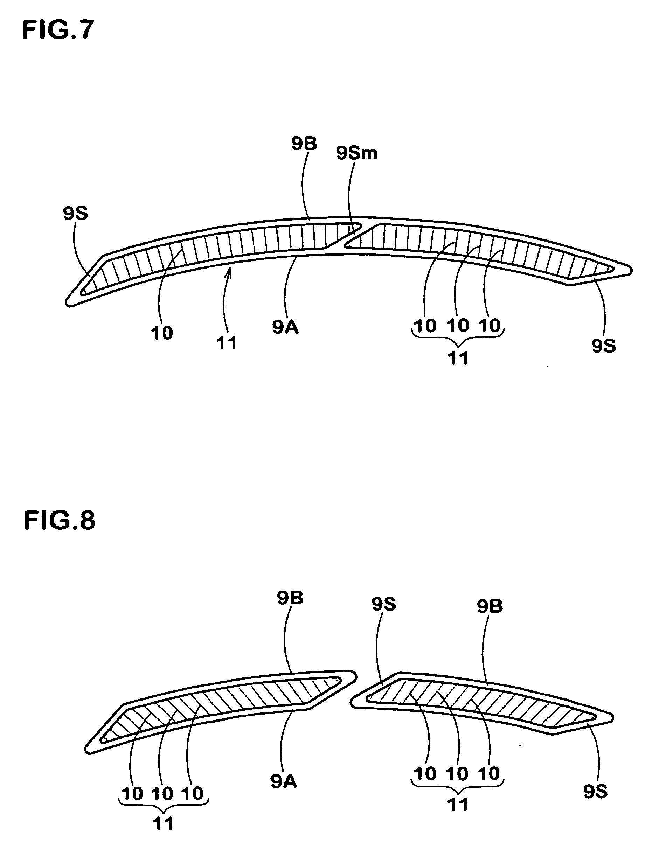

In Fig.7, a radial vent line 9Sm is further provided between the two radial vent lines 9S in the tire circumferential direction, thereby the surrounded serrated area is subdivided into two serrated areas. Thereby, the discharge of air trapped near the radial vent lines may be further promoted.

In Fig.8, the serrated area which is surrounded by the resultant continuous vent line 9 is formed at a plurality of circumferential positions around the tire rotational axis. And the inclining direction of the ribs in one serrated area is changed from that of another serrated area.

### Comparison tests

Radial tires of size 195/65R15 for passenger cars were manufactured as test tires and subjected to visual inspection.

In the test tires: the first and second vent lines were positioned radially inside and outside the radially outer end of the bead apex(constant height), respectively, and equidistantly therefrom in the tire radial direction; the widths 9w of the first and second vent lines were 1.0 mm; the heights 9v of the first and second vent lines were 0.5 mm; the heights 10D of the ribs were 0.3 mm; and the maximum widths 10W of the ribs 10 were 0.6 mm.

Only the following parameters were changed: the positions of the deepest parts 11u and shallowest parts 11h of the serrated area; the distance w between the first and second vent lines; the angle theta of the ribs; the alpha between side surfaces of the rib; and the pitches of the ribs.
The specifications are shown in Table 1.

In the visual inspection, the number of occurrences of bareness of rubber was counted and ranked into four ranks A(very few), B, c, and D(many). The results are indicated in Table 1.

Further, as to the first and second vent lines, the ribs and the vicinity of the serrated area, the tires were evaluated by ten ordinary persons. The results are indicated in Table 1 by an index based on Ref.1 tire being 100, wherein the larger the value, the better the appearance.

**Table 1**

| Tire | Ref. 1 | Ref.2 | Ex.1 | Ex.2 | Ex.3 | Ex.4 | Ex.5 | Ex.6 | Ex.7 | Ex.8 | Ex.9 | Ex.10 | Ex.11 | Ex.12 | Ex.13 | Ex.14 | Ex.15 | Ex.16 |
|---|---|---|---|---|---|---|---|---|---|---|---|---|---|---|---|---|---|---|
| Distance W (mm) | 18 | 18 | 6 | 8 | 30 | 35 | 18 | 18 | 18 | 18 | 18 | 18 | 18 | 18 | 18 | 18 | 18 | 18 |
| Serrated area (Fig.) | 9(B) | 9(A) | 4(B) | 4(B) | 4(B) | 4(B) | 4(B) | 4(B) | 4(B) | 4(B) | 4(B) | 4(B) | 4(B) | 4(B) | 4(B) | 4(B) | 4(B) | 4(B) |
| angle theta (deg.) | 0 | 0 | 0 | 0 | 0 | 0 | 35 | 45 | 55 | 0 | 0 | 0 | 0 | 0 | 0 | 0 | 0 | 0 |
| angle alpha (deg.) | 60 | 60 | 60 | 60 | 60 | 60 | 60 | 60 | 60 | 20 | 30 | 40 | 70 | 80 | 60 | 60 | 60 | 60 |
| pitches P (mm) | 1.2 | 1.2 | 1.2 | 1.2 | 1.2 | 1.2 | 1.2 | 1.2 | 1.2 | 1.2 | 1.2 | 1.2 | 1.2 | 1.2 | 0.6 | 0.9 | 1.5 | 1.8 |

| Test results | | | | | | | | | | | | | | | | | | |
|---|---|---|---|---|---|---|---|---|---|---|---|---|---|---|---|---|---|---|
| Bareness of rubber | D | C | B | none | none | A | none | none | A | A | A | none | none | none | none | none | none | none |
| Appearance | 100 | 100 | 105 | 120 | 120 | 110 | 120 | 120 | 110 | 110 | 110 | 120 | 120 | 120 | 115 | 120 | 120 | 115 |

## Claims

1. A pneumatic tire comprising
a tread portion,
a pair of sidewall portions,
a pair of bead portions, each provided with a bead core (5) and a bead apex (8) made of a hard rubber extending radially outwardly from the bead core (5) in a tapered manner,
a carcass extending between the bead portions through the tread portion and sidewall portions,
an outer surface of the tire provided with vent lines (9) extending in a tire circumferential direction and protruding from the outer surface of the pneumatic tire, wherein the vent lines (9) include a radially inner first vent line (9A) and a radially outer second vent line (9B),
a serrated area (11) provided between the first vent line (9A) and second vent line (9B), wherein the serrated area (11) comprises a plurality of circumferentially spaced small ribs (10), and the ribs (10) extend from the fist vent line (9A) to the second vent line (9B),
the serrated area (11) has deepest parts (11u) and shallowest parts (11h), wherein
the shallowest parts (11h) are located inside the ridge (9h) of each of the vent lines (9A and 9B), and the protruding height of the shallowest parts (11h) is lower than the protruding height of the vent lines (9), and
the deepest parts (11u) are located at the same level as or outside a virtual tire outer surface (3g), the virtual tire outer surface (3g) defined as smoothly connecting a tire outer surface immediately radially inside the radially inner first vent line (9A) and a tire outer surface immediately radially outside the radially outer second vent line (9B),
**characterized in that**
the vent lines (9) are provided in a region radially inside a maximum width position (m) of the carcass on the outer surface of the tire,
wherein the radially outer second vent line (9B) is disposed radially outside the radially outer end (8A) of the bead apex (8), and
the radially inner first vent line (9A) is disposed radially inside the radially outer end (8A) of the bead apex (8).

2. The pneumatic tire according to claim 1, wherein
a distance between the first vent line and second vent line is 8 to 30 mm.

3. The pneumatic tire according to claim 1 or 2, wherein
each said rib (10) extends at an angle of not more than 45 degrees with respect to the tire radial direction.

4. The pneumatic tire according to claim 1, 2 or 3, wherein
each said rib (10) has a trapezoidal cross sectional shape in its cross section perpendicular to the longitudinal direction thereof so that the width is gradually decreased towards the outside of the tire, and the angle between the side surfaces of the rib is not more than 60 degrees.

5. The pneumatic tire according to any one of claims 1-4, wherein
on the vent lines, there is at least one spew (16).

6. The pneumatic tire according to any one of claims 1-5, wherein
on the vent lines, there are a plurality of spews (16) which are arranged around the tire rotational axis at angularly intervals of from 25 to 35 degrees.

7. The pneumatic tire according to any one of claims 1-6, wherein
the first and second vent lines (9A and 9B) each have circumferential ends which are connected by radial vent lines (9S) so that the serrated area (11) is ,surrounded by a closed vent line formed by the first and second vent lines (9A and 9B) and radial vent lines (9S).

## Patentansprüche

1. Luftreifen, umfassend
einen Laufflächenabschnitt,
ein Paar Seitenwandabschnitte,
ein Paar Wulstabschnitte, die jeweils mit einem Wulstkern (5) und einem Wulstkernreiter (8), der aus Hartgummi hergestellt ist und sich von dem Wulstkern (5) auf eine abgeschrägte Weise radial nach außen erstreckt, versehen sind,
einer Karkasse, die sich zwischen den Wulstabschnitten durch den Laufflächenabschnitt und Seitenwandabschnitte erstreckt,
eine Außenfläche des Reifens, die mit Entlüftungsprofillinien (9) versehen ist, die sich in einer Reifenumfangsrichtung erstrecken und von der Außenfläche des Luftreifens vorstehen, wobei die Entlüftungsprofillinien (9) eine radial innere erste Entlüftungsprofillinie (9A) und eine radial äußere zweite Entlüftungsprofillinie (9B) umfassen,
einen gezahnten Bereich (11), der zwischen der ersten Entlüftungsprofillinie (9A) und der zweiten Entlüftungsprofillinie (9B) vorgesehen ist, wobei der gezahnte Bereich (11) eine Mehrzahl von in Umfangsrichtung beabstandeten kleinen Rippen (10) umfasst, und die Rippen (10) sich von der ersten Entlüftungsprofillinie (9A) zu der zweiten Entlüftungsprofillinie (9B) erstrecken,
wobei der gezahnte Bereich (11) tiefste Teile (11u) und flachste Teile (11h) aufweist, wobei
die flachsten Teile (11h) innerhalb des Steges (9h) von jeder der Entlüftungsprofillinien (9A und 9B) angeordnet ist, und die vorstehende Höhe der flachsten Teile (11 h) niedriger als die vorstehende Höhe der Entlüftungsprofillinien (9) ist, und
die tiefsten Teile (11u) auf dem gleichen Niveau wie oder außerhalb von einer virtuellen Außenfläche (3g) des Reifes angeordnet sind, wobei die virtuelle Außenfläche (3g) des Reifens derart definiert ist, dass sie eine Außenfläche des Reifens unmittelbar radial innerhalb der radial inneren ersten Entlüftungsprofillinie (9A) und eine Außenfläche des Reifens unmittelbar radial außerhalb der radial äußeren zweiten Entlüftungsprofillinie (9B) übergangslos verbindet,
**dadurch gekennzeichnet, dass**
die Entlüftungsprofillinien (9) in einem Bereich radial innerhalb einer Position maximaler Breite (m) der Karkasse an der Außenfläche des Reifens vorgesehen sind,
wobei die radial äußere zweite Entlüftungsprofillinie (9B) radial außerhalb des radial äußeren Endes (8A) des Wulstkernreiters (8) angeordnet ist, und
die radial innere erste Entlüftungsprofillinie (9A) radial innerhalb des radial äußeren Endes (8A) des Wulstkernreiters (8) angeordnet ist.

2. Luftreifen nach Anspruch 1,
wobei ein Abstand zwischen der ersten Entlüftungsprofillinie und der zweiten Entlüftungsprofillinie 8 bis 30 mm beträgt.

3. Luftreifen nach Anspruch 1 oder 2,
wobei jede Rippe (10) sich unter einem Winkel von nicht mehr als 45 Grad mit Bezug auf die radiale Richtung des Reifens erstreckt.

4. Luftreifen nach Anspruch 1, 2 oder 3,
wobei jede Rippe (10) eine trapezförmige Querschnittsform in ihrem Querschnitt senkrecht zur Längsrichtung davon aufweist, so dass die Breite allmählich zu der Außenseite des Reifens hin abnimmt, und der Winkel zwischen den Seitenflächen der Rippe nicht größer als 60 Grad ist.

5. Luftreifen nach einem der Ansprüche 1 bis 4,
wobei es auf den Entlüftungsprofillinien zumindest einen Austrieb (16) gibt.

6. Luftreifen nach einem der Ansprüche 1 bis 5,
wobei es auf den Entlüftungsprofillinien eine Mehrzahl von Austrieben (16) gibt, die um die Drehachse des Reifens herum in Winkelintervallen von 25 bis 35 Grad angeordnet sind.

7. Luftreifen nach einem der Ansprüche 1 bis 6,
wobei die erste und zweite Entlüftungsprofillinie (9A und 9B) jeweils Umfangsenden aufweisen, die durch radiale Entlüftungsprofillinien (9S) verbunden sind, so dass der gezahnte Bereich (11) durch eine geschlossene Entlüftungsprofillinie umgeben ist, die durch die erste und zweite Entlüftungsprofillinie (9A und 9B) und radiale Entlüftungsprofillinien (9S) gebildet ist.

## Revendications

1. Bandage pneumatique comprenant
une portion formant bande de roulement, une paire de portions formant parois latérales,
une paire de portions de talons, dotées chacune d'une âme de talon (5) et d'un bourrage de talon (8) réalisé en caoutchouc dur, s'étendant radialement vers l'extérieur depuis l'âme de talon (5) d'une manière effilée,
une carcasse s'étendant entre les portions de talons et traversant la portion formant bande de roulement et les portions formant parois latérales,
une surface extérieure du pneumatique étant dotée de lignes de ventilation (9) s'étendant en direction circonférentielle du pneumatique et en projection depuis la surface extérieure du bandage pneumatique, dans lequel les lignes de ventilation (9) incluent une première ligne de ventilation radialement intérieure (9A) et une seconde ligne de ventilation radialement extérieure (9B),
une zone dentelée (11) prévue entre la première ligne de ventilation (9A) et la seconde ligne de ventilation (9B), telle que la zone dentelée (11) comprend une pluralité de petites nervures (10) espacées en sens circonférentiel, et les nervures (10) s'étendent depuis la première ligne de ventilation (9A) jusqu'à la seconde ligne de ventilation (9B),
la zone dentelée (11) comporte des parties plus profondes (11u) et des parties peu profondes (11h), dans lesquelles
les parties peu profondes (11h) sont situées à l'intérieur de la bordure (9h) de chacune des lignes de ventilation (9A et 9B) et la hauteur de projection des parties peu profondes (11h) est inférieure à la hauteur de projection des lignes de ventilation (9), et
les parties plus profondes (11u) sont situées au même niveau que ou à l'extérieur d'une surface extérieure virtuelle du pneumatique (3g), la surface extérieure virtuelle du pneumatique (3g) étant définie comme reliant en douceur une surface extérieure du pneumatique immédiatement radialement à l'intérieur de la première ligne de ventilation radialement intérieure (9A) et une surface extérieure du pneumatique immédiatement radialement à l'extérieur de la seconde ligne de ventilation radialement extérieure (9B),
**caractérisé en ce que**
les lignes de ventilation (9) sont prévues dans une région radialement à l'intérieur d'une position de largeur maximum (m) de la carcasse sur la surface extérieure du pneumatique,
dans lequel la seconde ligne de ventilation radialement extérieure (9B) est disposée radialement à l'extérieur de l'extrémité radialement extérieure (8A) du bourrage de talon (8), et
la première ligne de ventilation radialement intérieure (9A) est disposée radialement à l'intérieur de l'extrémité radialement extérieure (8A) du bourrage de talon (8).

2. Bandage pneumatique selon la revendication 1, dans lequel une distance entre la première ligne de ventilation et la seconde ligne de ventilation est de 8 à 30 mm.

3. Bandage pneumatique selon la revendication 1 ou 2, dans lequel chacune desdites nervures (10) s'étend sous un angle qui ne dépasse pas 45° par rapport à la direction radiale du pneumatique.

4. Bandage pneumatique selon la revendication 1, 2 ou 3, dans lequel chacune desdites nervures (10) présente une forme de section transversale trapézoïdale dans sa section transversale perpendiculaire à sa direction longitudinale, de sorte que la largeur diminue progressivement vers l'extérieur du pneumatique, et l'angle entre les surfaces latérales de la nervure ne dépasse pas 60°.

5. Bandage pneumatique selon l'une quelconque des revendications 1 à 4, dans lequel il est prévu au moins une ailette (16) sur les lignes de ventilation.

6. Bandage pneumatique selon l'une quelconque des revendications 1 à 5, dans lequel il est prévu une pluralité d'ailettes (16) sur les lignes de ventilation, qui sont agencées autour de l'axe de rotation du pneumatique à intervalles angulaires de 25 à 35°.

7. Bandage pneumatique selon l'une quelconque des revendications 1 à 6, dans lequel
la première et la seconde ligne de ventilation (9A et 9B) ont chacune des extrémités circonférentielles qui sont connectées par des lignes de ventilation radiales (9S), de sorte que la zone dentelée (11) est entourée par une ligne de ventilation fermée formée par la première et la seconde ligne de ventilation (9A et 9B) et par les lignes de ventilation radiales (9S).
